**Europäisches Patentamt**

**European Patent Office**

**Office européen des brevets**

(19)

(11) Numéro de publication : **0 077 727
B1**

# FASCICULE DE BREVET EUROPÉEN

(12)

(45) Date de publication du fascicule du brevet :
**17.07.85**

(21) Numéro de dépôt : **82401890.7**

(22) Date de dépôt : **14.10.82**

(51) Int. Cl.⁴ : **B 29 D   3/02**

(54) **Demi-produit à base de fibres préimprégnées de résine polymérisable.**

(30) Priorité : **20.10.81 FR 8119706**

(43) Date de publication de la demande :
**27.04.83 Bulletin 83/17**

(45) Mention de la délivrance du brevet :
**17.07.85 Bulletin 85/29**

(84) Etats contractants désignés :
**BE CH DE GB IT LI NL SE**

(56) Documents cités :
**FR-A- 1 091 813
FR-A- 1 167 764
FR-A- 1 538 040
FR-A- 2 396 645
GB-A- 2 028 715
US-A- 2 830 926
US-A- 3 756 905
US-A- 4 051 289**

(73) Titulaire : **SOCIETE NATIONALE INDUSTRIELLE
AEROSPATIALE Société dite:
37 Boulevard de Montmorency
F-75781 Paris Cedex 16 (FR)**

(72) Inventeur : **Michaud-Soret, Jean Alain
21 Villa Daviel
F-75013 Paris (FR)**

(74) Mandataire : **Barnay, André François et al
Cabinet Barnay 80 rue Saint-Lazare
F-75009 Paris (FR)**

Jouve, 18, rue St-Denis, 75001 Paris, France

**Description**

Dans la construction de pièces complexes en matériaux composites fibres-résines, on assemble les différents éléments individuels qui les composent par exemple par collage, ces éléments ayant pu à cet effet préalablement subir une pré-polymérisation partielle de leur résine.

On assemble également, quand ils sont encore humides, c'est-à-dire imprégnés de résine non polymérisée, des fils, rubans ou tissus, puis on polymérise le tout.

Pour simplifier le travail on prépare à l'avance des feuilles composites formées d'une couche de fil ou de fibres agencés de façon appropriée sur un tissu, l'ensemble étant préimprégné.

On connaît par exemple un demi-produit à base de fibres, décrit par le brevet français FR-A-1 091 813 et comprenant au moins une couche plane formant support et une nappe de fils juxtaposés sur ce support suivant une direction longitudinale, l'ensemble étant préalablement imprégné d'une résine non polymérisée.

Un tel demi-produit prêt à l'emploi renforcé ou non par des rubans de stratifils également préimprégnés, peut être utilisé tel quel et permet un gain de temps appréciable.

Cependant, pour la fabrication de pièces en matériaux composites de grandes dimensions et/ou d'épaisseur importante, on doit superposer un certain nombre de ces feuilles ou panneaux de demi-produit, afin de conférer à la pièce les propriétés de résistance désirées, car ce demi-produit ne présente pas une tenue transversale satisfaisante en faible épaisseur.

L'invention a en conséquence pour but de réaliser un demi-produit à base de fibres préimprégnées de résine polymérisable, destiné à la fabrication de pièces en matériaux composites de grandes dimensions et/ou d'épaisseur importante, du type comprenant au moins une couche de support formée d'une nappe de base plane de tissu préimprégné d'une résine non polymérisée ou partiellement polymérisée et d'une nappe de rubans de stratifils également préimprégnés par la résine non polymérisée ou partiellement polymérisée caractérisé en ce que lesdits rubans sont disposés en rangées juxtaposées sur ledit tissu suivant une même direction longitudinale, chaque rangée comprenant plusieurs rubans de stratifils préimprégnés superposés gardés à l'état humide, et par le fait qu'il comporte au moins une autre nappe de tissu préimprégné gardé à l'état humide, offrant une configuration ondulée et s'étendant alternativement dessus et dessous lesdites rangées juxtaposées de ladite nappe de rubans. Ladite nappe de rubans de stratifils préimprégnés peut aussi être recouverte d'une nappe plane de tissu préimprégné, gardé à l'état humide, sur la face opposée à la nappe de base, ce qui augmente encore la rigidité du demi-produit.

Suivant l'invention on réalise un demi-produit du type précité présentant une tenue transversale améliorée, même en faible épaisseur, et permettant en outre de réaliser des pièces présentant une structure de type alvéolaire.

Lorsqu'on désire réaliser une pièce d'épaisseur relativement grande, on peut faire appel à un demi-produit constitué de plusieurs couches superposées offrant chacune une structure conforme à l'une de celles que l'on vient de spécifier. En particulier, l'empilage ordonné de couches comprenant un tissu de configuration ondulée peut avantageusement conduire à une structure alvéolaire. Plus généralement, l'orientation des rubans de stratifils des diverses nappes peut être soit identique, soit différente (par exemple suivant des directions croisées à 45° ou à 90°). La mise en place précise de ces constituants peut être réalisée mécaniquement par des procédés connus, par exemple au moyen de batteries de dévidoirs et de rouleaux presseurs.

La résine que contient un demi-produit selon l'invention est normalement non polymérisée ou seulement partiellement polymérisée. En vue de son stockage, il convient de le flanquer de feuilles protectrices détachables revêtant ses deux faces, car la résine non polymérisée le rend poisseux. Pour la réalisation d'une pièce structurale, le demi-produit est soumis, après moulage, à un traitement de polymérisation aboutissant à la pièce achevée.

La résine d'imprégnation du demi-produit peut aussi être complètement polymérisée. Il se présente alors sous la forme d'un élément de construction rigide, par exemple d'un panneau plan utilisable à la manière d'une tôle.

Les fibres composant les rubans de stratifils et le ou les tissus qu'incorpore le demi-produit sont de préférence des fibres minérales telles que des fibres de verre, de carbone, de bore ou de polyamide aromatique « Kevlar ». Les fibres composées des trois dernières substances, beaucoup plus onéreuses que les fibres de verre, permettent par contre d'obtenir des rapports caractéristiques mécaniques/masse plus favorables.

L'usage du demi-produit selon l'invention, qui est en résumé constitué par un pré-assemblage de rubans de stratifils et d'au moins un tissu de base avec résine d'imprégnation, permet de supprimer les opérations longues et difficiles nécessaires jusqu'ici pour la mise en place de nombreux éléments préimprégnés individuels. Ce demi-produit offre une manipulation aisée. Son prix de revient ne dépasse guère le prix de ses éléments constitutifs. Il peut être utilisé soit seul, soit en combinaison avec une matière massive de remplissage (structure en sandwich). Il permet de réaliser aisément, avec un notable gain de temps et d'argent, les pièces les plus diverses devant présenter de hautes qualités mécaniques et éventuellement de grandes dimensions.

Dans le domaine aéronautique, de nombreuses structures, telles que des revêtements, longerons, lisses, planchers, des moyeux et des pales d'hélicoptères, peuvent être réalisées à partir du demi-produit selon l'invention, ainsi que des pales d'éoliennes et, dans la construction navale, des éléments tels que « foils », dérives, gouvernails, mâts, lisses, flotteurs, coques et renforcement de coques, bras de trimarans. Dans le domaine de la construction mécanique et du bâtiment, le demi-produit permet de fabriquer des poutres diverses, des profilés pour charpente, des barrières de sécurité, des toitures, des tubes d'échafaudages ou des éléments de pont, ainsi que, dans le domaine de la construction automobile, des structures et planchers pour camions, des châssis et des suspensions.

Les caractéristiques du demi-produit selon l'invention, la facilité de son utilisation et la possibilité de le réaliser économiquement (à partir de verre E ou R par exemple) laissent entrevoir de vastes domaines d'application.

La description qui va suivre, en regard des dessins annexés à titre d'exemples non limitatifs, permettra de bien comprendre comment la présente invention peut être mise en pratique.

La figure 1 montre en section un demi-produit classique.

Les figures 2 et 3 représentent en section transversale deux formes d'exécution d'un demi-produit selon l'invention.

La figure 4 représente la tranche d'un panneau sandwich incorporant des feuilles de demi-produit conformes à la figure 2.

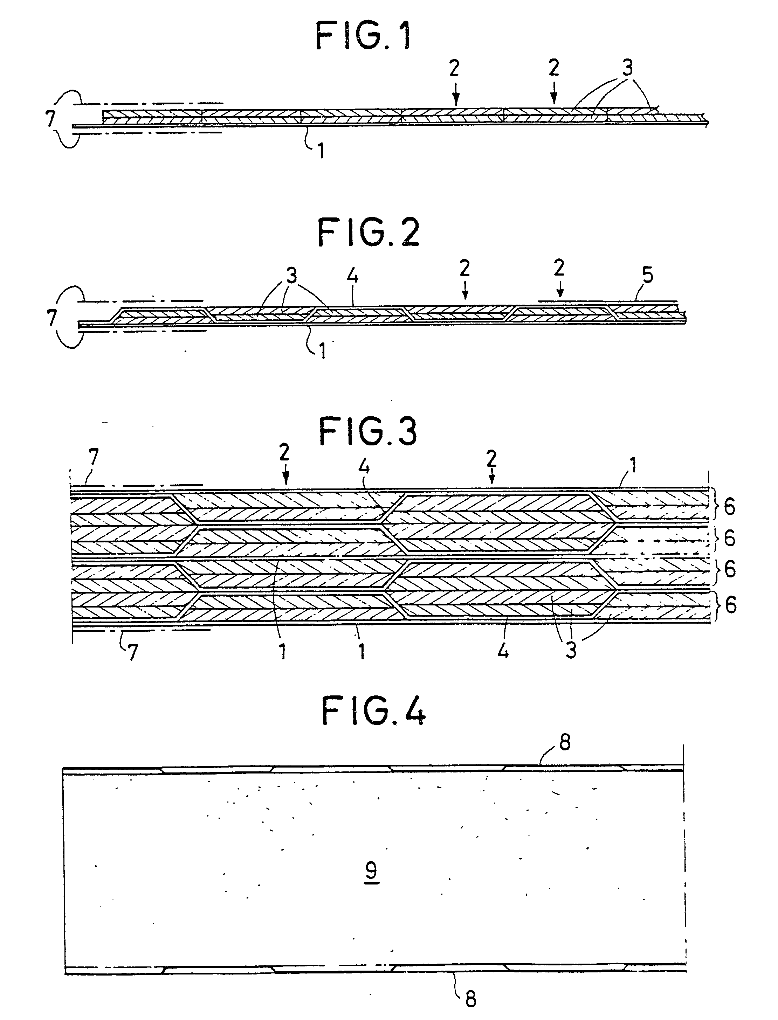

Un demi-produit connu comprend, dans sa forme la plus simple (figure 1), une nappe de tissu de base 1 et des rangées 2 de rubans de stratifils 3 juxtaposées sur le tissu 1 et orientées suivant une même direction longitudinale. Dans le présent exemple, chaque rangée 2 est composée de deux rubans 3 superposés.

La figure 2 montre un demi-produit selon l'invention qui incorpore une autre nappe de tissu 4. Celle-ci n'est pas plane, mais ondule en passant alternativement par-dessous et par-dessus les rangées 2 de rubans 3. Elle n'empêche pas le demi-produit de pouvoir être courbé ou plié sans difficulté dans la direction longitudinale. Une troisième nappe de tissu 5 peut être en outre prévue, comme on l'a représenté dans la partie de droite de la figure 2, pour recouvrir l'ensemble des rangées 2 de rubans 3 en donnant au demi-produit une structure symétrique. Une telle nappe 5, qui est plane comme la nappe de base 1 et de nature identique ou non à cette dernière, peut aussi être prévue dans le cas de la forme d'exécution de la figure 1. Toutefois, elle augmente la rigidité du demi-produit, de sorte que la structure dissymétrique (sans nappe 5) est préférable lorsqu'on désire enrouler le demi-produit sur lui-même en vue de son stockage.

Un demi-produit conforme à la figure 1 ou 2 peut en pratique se présenter sous la forme de panneaux ou de bandes ayant par exemple une épaisseur de 2 à 2,3 mm suivant le taux d'imprégnation de résine, une largeur de 25 cm, une longueur théoriquement non limitée et une masse au mètre carré de 4 kg, soit une masse linéique de 1 kg/m, à comparer avec les faibles valeurs des caractéristiques correspondantes des éléments constitutifs (masse linéique des rubans de stratifils : quelques dizaines de g/m ; masse surfacique des tissus : quelques centaines de g/m²).

Le taux d'imprégnation en résine des stratifils et des tissus, de même que la qualité de ladite résine sont choisis en fonction des caractéristiques finales demandées au demi-produit. En utilisant par exemple des résines du type époxy couramment employées dans la construction de pièces aéronautiques fortement sollicitées, l'imprégnation est effectuée à un taux d'environ 20 % de résine en masse. Le demi-produit présente alors, après polymérisation, une très bonne résistance à la traction, mais il ne se conserve pas à la température ambiante et doit être stocké en chambre froide.

Pour éviter cet inconvénient, on réalise l'imprégnation avec une résine latente. En raison de ses caractéristiques propres, le taux d'imprégnation est plus important, de l'ordre de 30 % en masse. Le demi-produit ainsi obtenu peut se conserver plusieurs mois à température ambiante, mais la résistance mécanique des pièces réalisées n'est pas aussi élevée.

Sur la figure 3 a été représenté un demi-produit de structure plus complexe ; il est formé de la superposition de plusieurs couches 6 dont chacune correspond à la forme d'exécution de la figure 2. Quatre couches 6 sont ici empilées ; elles sont agencées de manière que leurs rangées 2 coïncident et que les nappes ondulées de tissu 4 forment des canaux de section hexagonale comme on le voit sur la figure, ce qui conduit à une structure dont la section rappelle un nid d'abeilles. On notera que la nappe de tissu 1 centrale correspond à elle seule aux nappes de base des deux couches 6 adjacentes. En variante, dans une telle structure, on peut omettre toute nappe de tissu plane intermédiaire.

Les fibres des nappes de tissu 1, 4 et des rubans de stratifils 3 sont des fibres minérales, par exemple des fibres de verre, de carbone, de bore ou de Kevlar. Elles sont préimprégnées de résine polymérisable. Dans l'état du demi-produit propre à l'utilisation, cette résine est, normalement, non polymérisée ou partiellement polymérisée. Le demi-produit se présente comme une feuille flexible et malléable, qui peut être pliée et enroulée et dont les faces quelque peu poisseuses doivent être revêtues de feuilles de protection 7, par exemple en polyéthylène, qui sont retirées au moment de la mise en œuvre du demi-produit.

La résine d'imprégnation du demi-produit peut aussi être complètement polymérisée. Le demi-produit se présente alors comme une feuille rigide, comparable à une tôle et non susceptible d'enroulement. Plus précisément, le demi-produit est alors commercialisable sous la forme de tôles planes ou ondulées, de tubes ou de profilés semblables aux demi-produits utilisés couramment en construction métallique, ou sous forme de feuilles de revêtement dans des panneaux de structure en sandwich.

On a représenté sur la figure 4 un exemple de panneau sandwich, comprenant deux feuilles de revêtement 8 constituées par un demi-produit du type de la figure 2 (le type de la figure 1 conviendrait aussi) doté d'une nappe 5 complémentaire, et un remplissage 9 constitué par exemple d'une mousse rigide de matière plastique. Une telle structure peut être renforcée sur chacune de ses faces par une nappe de tissu complémentaire qui lui confère une bonne rigidité. Une telle nappe de renforcement est par exemple constituée par un tissu de fibres de carbone orientées à ± 45° par rapport à la direction des rubans de stratifils.

On a pu constater qu'une bande de 30 mm de large tirée d'une feuille de demi-produit conforme à la figure 2 (avec une épaisseur égale à 2 mm), tractionnée directement entre mors d'une machine, se rompt à 7 100 daN. Ceci correspond à une contrainte moyenne de 120 hbar environ et à une contrainte dans les stratifils de l'ordre de 150 hbar. La masse spécifique d'un tel produit est de l'ordre de 2 t/m³. Une autre bande tirée dans le sens transversal se rompt pour une contrainte moyenne de l'ordre de 10 hbar.

Une structure réalisée par superposition de plusieurs couches (figure 3) peut s'opposer à l'éclatement des fibres lors d'essais d'introduction de charge par un alésage et un axe traversant ; elle apporte des propriétés de tenue au délaminage et à la propagation d'une déchirure.

L'orientation des fibres de chaque tissu que comporte le demi-produit par rapport aux fibres des autres nappes est quelconque. Elle est choisie pour donner le résultat optimal dans chaque cas particulier.

**Revendications**

1. Demi-produit à base de fibres préimprégnées de résine polymérisable, destiné à la fabrication de pièces en matériaux composites de grandes dimensions et/ou d'épaisseur importante, du type comprenant au moins une couche de support formée d'une nappe de base plane (1) de tissu préimprégné d'une résine non polymérisée ou partiellement polymérisée et d'une nappe de rubans de stratifils (3) également préimprégnés par la résine non polymérisée ou partiellement polymérisée caractérisé en ce que lesdits rubans sont disposés en rangées (2) juxtaposées sur ledit tissu (1) suivant une même direction longitudinale, chaque rangée (2) comprenant plusieurs rubans de stratifils (3) préimprégnés superposés gardés à l'état humide, et par le fait qu'il comporte au moins une autre nappe (4) de tissu préimprégné gardé à l'état humide, offrant une configuration ondulée et s'étendant alternativement dessus et dessous lesdites rangées (2) juxtaposées de ladite nappe de rubans.

2. Demi-produit selon la revendication 1, caractérisé par le fait que ladite nappe de rubans de stratifils (3) préimprégnés est recouverte d'une nappe plane (5) de tissu préimprégné, gardé à l'état humide, sur la face opposée à la nappe de base (1).

3. Demi-produit caractérisé par le fait qu'il est constitué de plusieurs couches (6) superposées offrant chacune une structure conforme à l'une des revendications 1 et 2.

4. Demi-produit selon l'une quelconque des revendications 1 à 3, caractérisé par le fait qu'il est flanqué de feuilles protectrices (7) détachables revêtant ses deux faces.

**Claims**

1. Half-product based on fibres pre-impregnated with polymerisable resin, for the manufacture of articles of composite materials of large dimensions and/or substantial thickness, of the type comprising at least one supporting layer formed by a flat base web (1) of fabric, pre-impregnated with a non-polymerised or partly-polymerised resin and a web of stratifil ribbons (3) likewise pre-impregnated with the non-polymerised or partly-polymerised resin, characterised in that the ribbons are disposed in rows (2) juxtaposed upon the fabric (1) in the same longitudinal direction, each row (2) comprising a plurality of superposed pre-impregnated stratifil ribbons (3) kept in the wet state, and in that it comprises at least one other web (4) of pre-impregnated fabric kept in the wet state, having an undulating configuration and extending alternately above and below the juxtaposed rows (2) of the web of ribbons.

2. Half-product according to claim 1, characterised in that the web of pre-impregnated stratifil ribbons (3) is covered by a flat web (5) of pre-impregnated fabric kept in the wet state, on the opposite side to the base web (1).

3. Half-product, characterised in that it comprises a plurality of superposed layers (6) each having a structure in accordance with either of claims 1 and 2.

4. Half-product according to any of claims 1 to 3, characterised in that it is covered by detachable protective sheets (7) covering its two sides.

**Patentansprüche**

1. Zwischenprodukt aus mit polymerisierbarem Harz imprägnierten Fasern, das zur Herstellung von aus zusammengesetzten Materialien bestehenden Teilen großer Abmessungen und/oder sehr großer Dicke vorgesehen ist, wobei es wenigstens eine Stützschicht aufweist, die von einer ebenen Grundschicht (1) aus einem mit einem nicht oder teilweise polymerisierten Harz imprägnierten Gewebe und von einer Streifenschicht (3) aus gleichmäßig mit dem polymerisierten oder teilpolymerisierten Harz vorimprägnierten Fadensträngen gebildet ist, dadurch gekennzeichnet, daß die Streifen in nebeneinander liegenden Reihen (2) auf dem Gewebe (1) in gleicher Längsrichtung angeordnet sind, wobei jede Reihe (2) mehrere Streifen von vorimprägnierten, übereinandergelegten, im feuchten Zustand gehaltenen Fadensträngen enthält und daß es wenigstens eine weitere, vorimprägnierte und im feuchten Zustand gehaltene Gewebeschicht (4) umfaßt, die eine gewellte Gestalt aufweist und abwechselnd ober- und unterhalb der nebeneinander liegenden Reihen (2) der Streifenschicht verläuft.

2. Zwischenprodukt nach Anspruch 1, dadurch gekennzeichnet, daß die Streifenschicht der vorimprägnierten Fadenstränge (2) auf der der Grundschicht (1) abgewandten Seite von einer ebenen, vorimprägnierten, im feuchten Zustand gehaltenen Gewebeschicht (5) bedeckt ist.

3. Zwischenprodukt, dadurch gekennzeichnet, daß es aus mehreren übereinanderliegenden Schichten (6) gebildet ist, deren jede eine Struktur nach einem der Ansprüche 1 und 2 aufweist.

4. Zwischenprodukt nach einem der Ansprüche 1 bis 3, dadurch gekennzeichnet, daß es von seine beiden Seiten belegenden, trennbaren Schutzfolien (7) bedeckt ist.

# FIG.1

# FIG.2

# FIG.3

# FIG.4